# FASCICULE DE BREVET EUROPEEN

(11) **EP 1 403 621 B1**
(45) Date de publication et mention de la délivrance du brevet: **15.08.2007**
(21) Numéro de dépôt: 03292189.2
(22) Date de dépôt: 05.09.2003
(51) Int. Cl.: G01D 5/245, B62D 15/02

(54) **Capteur d'angle absolu**
Absoluter Drehgeber
Absolute angle sensor

(30) Priorité: 27.09.2002 FR 0212016
(43) Date de publication de la demande: 31.03.2004
(73) Titulaire: SNR ROULEMENTS, F-74010 Annecy Cedex (FR)
(72) Inventeur: Desbiolles, Pascal, 74570 Thorens-Glieres (FR)
(74) Mandataire: Geismar, Thierry

(56) Documents cités:
- EP-A- 0 321 439
- EP-A- 1 167 927
- US-A- 5 065 324

## Description

L'invention concerne un dispositif de détermination de la position angulaire absolue d'un organe tournant par rapport à une structure fixe, un système de direction pour véhicule automobile ainsi qu'un roulement comprenant un tel dispositif.

Dans de nombreuses applications, notamment automobile telles que les systèmes de contrôle de trajectoire ou les systèmes de direction assistée électrique, il est nécessaire de connaître la position angulaire absolue d'un organe tournant par rapport à une structure fixe.

On entend par position angulaire absolue l'angle séparant la position de l'organe tournant à un instant donné, d'une position de référence de l'organe tournant, cette position de référence étant fixe et donnée par rapport à la structure fixe.

Par opposition, la position angulaire relative est l'angle séparant la position de l'organe d'une position initiale quelconque et variable par rapport à la structure fixe.

On connaît du document EP-1 167 927 un tel dispositif qui utilise notamment un codeur destiné à être mis en rotation conjointement à l'organe tournant, ledit codeur comprenant une piste multipolaire principale et une piste multipolaire dite «top tour » qui sont concentriques, ladite piste top tour comprenant une singularité de sorte que le capteur associé délivre une impulsion par tour de codeur. Après sa mise en service, un tel dispositif détermine la position angulaire absolue dès la détection de la première impulsion top tour.

Une limitation de ce dispositif est que la détection de l'impulsion n'intervient qu'une seule fois par tour de codeur. Dans certain cas, il en résulte qu'un déplacement angulaire important de l'organe tournant doit être effectué avant de connaître sa position angulaire absolue. Et, avec le dispositif connu, il n'est pas possible d'augmenter le nombre de singularités par tour de codeur faute de pouvoir les discriminer entre elles.

L'invention propose notamment un dispositif perfectionné qui, après sa mise en service, permet de déterminer la position angulaire absolue du codeur après un déplacement angulaire qui est réduit et ajustable en fonction de l'application envisagée.

A cet effet, et selon un premier aspect, l'invention propose un dispositif de détermination de la position angulaire absolue d'un organe tournant par rapport à une structure fixe, ledit dispositif comprenant :
- un codeur destiné à être mis en rotation conjointement à l'organe tournant, ledit codeur comprenant une piste multipolaire principale et une piste multipolaire dite « top tour » qui sont concentriques, ladite piste top tour comprenant M singularités réparties angulairement ;
- un capteur fixe disposé en regard et à distance d'entrefer du codeur, comprenant au moins trois éléments sensibles dont au moins deux sont positionnés en regard de la piste principale de sorte à délivrer deux signaux électriques S1, S2 périodiques en quadrature et au moins un est positionné en regard de la piste top tour de sorte à délivrer un signal électrique S3, le capteur comprenant un circuit électronique apte, à partir des signaux S1, S2 et S3, à délivrer deux signaux digitaux de position A, B carrés en quadrature qui sont représentatifs de la position angulaire de l'organe tournant et un signal top tour C sous forme de M impulsions par tour du codeur ;
- un dispositif de traitement des signaux A, B, C qui comprend des moyens de comptage aptes à déterminer, à partir d'une position initiale, les variations de la position angulaire du codeur ;
- des moyens de mesure de la position angulaire de l'organe tournant avec une incertitude angulaire Δθ ;
dans lequel les M singularités sont représentatives chacune d'une position angulaire absolue de l'organe tournant et sont réparties sur la piste top tour avec un écart angulaire entre chacune d'entre elles qui est supérieur à 2 Δθ, le dispositif de traitement comprenant des moyens de recalage de la position initiale qui, lors de la détection d'une impulsion, sont aptes à discriminer l'impulsion détectée en fonction de la position angulaire issue des moyens de mesure et à affecter, en tant que position initiale, la valeur de la position angulaire absolue associée à ladite impulsion.

Selon un deuxième aspect, l'invention propose un roulement équipé d'un tel dispositif de détermination, du type comprenant une bague fixe destinée à être associée à un organe fixe, une bague tournante destinée à être mise en rotation par l'organe tournant et des corps roulants disposés entre lesdites bagues, dans lequel le codeur est associé à la bague tournante.

Selon un troisième aspect, l'invention propose un système de direction pour véhicule automobile, comprenant un tel dispositif de détermination, le codeur étant solidaire en rotation du volant de direction du véhicule et le capteur étant solidaire du châssis du véhicule, de sorte à mesure la position angulaire absolue du volant par rapport au châssis.

D'autres objets et avantages de l'invention apparaîtront au cours de la description qui suit, faite en référence aux dessins annexés, dans lesquels :
- la figure 1 est une vue de face d'un codeur utilisable dans un dispositif de détermination selon l'invention, ledit codeur comprenant une piste multipolaire principale et une piste multipolaire top tour ;
- la figure 2 est une vue schématique et partielle d'un système de direction pour véhicule automobile, qui est équipé d'un dispositif de détermination de la position angulaire absolue du volant ;
- la figure 3 est une vue en coupe longitudinale d'un roulement équipé d'un dispositif de détermination de la position angulaire absolue de la bague tournante par rapport à la bague fixe ; le capteur, le dispositif de traitement des signaux et les moyens de mesure de la position angulaire n'étant pas représentés.

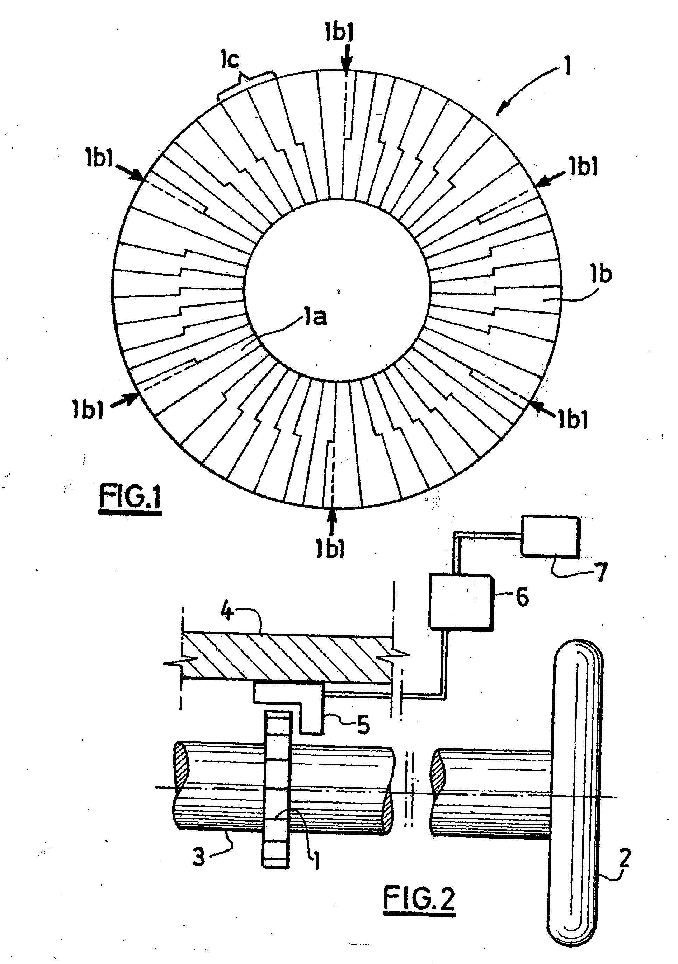

L'invention concerne un dispositif de détermination de la position angulaire absolue d'un organe tournant par rapport à une structure fixe, qui comprend un codeur 1 tel que celui représenté sur la figure 1.

Dans une application particulière envisagée, le dispositif est intégré dans un système de direction de sorte à mesurer la position angulaire absolue du volant de direction 2 par rapport au châssis, cette mesure pouvant être utilisée dans des systèmes de contrôle de trajectoire du véhicule ou des systèmes d'assistance de la direction.

En relation avec la figure 2, on décrit un système de direction comprenant un arbre de direction 3 sur lequel est monté un codeur 1 tel que celui représenté sur la figure 1, de sorte à assurer la solidarisation en rotation de la colonne 3 et du codeur 1. De façon connue, la colonne 3 est associée à un volant de direction 2 par l'intermédiaire duquel le conducteur applique un couple de braquage. Par ailleurs, la colonne 3 est agencée pour transmettre le couple de braquage aux roues de direction du véhicule. A cet effet, les roues peuvent être associées mécaniquement à la colonne 3 par l'intermédiaire d'un pignon de crémaillère et d'une crémaillère afin de transformer le mouvement de rotation de la colonne 3 en déplacement angulaire des roues, ou être découplées de la colonne 3. Dans ce dernier cas, le codeur 1 peut être associé directement à une partie du volant 2.

Le volant 2 est agencé pour pouvoir effectuer une pluralité de tours, typiquement deux, autour de la position dans laquelle les roues sont droites.

Le système de direction comprend en outre un élément fixe 4 qui est solidaire du châssis du véhicule automobile, un capteur 5 étant associé sur ledit élément de sorte que les éléments sensibles dudit capteur soient disposés en regard et à distance d'entrefer du codeur 1.

Pour pouvoir déterminer la position angulaire absolue du codeur 1, et donc du volant 2, par rapport à l'élément fixe 4, et donc au châssis, le codeur 1 comprend une piste multipolaire principale 1a et une piste multipolaire dite « top tour » 1b qui sont concentriques. La piste top tour 1b comprend M (avec M > 1) singularités 1b1 réparties angulairement.

Dans un exemple particulier, le codeur 1 est formé d'un anneau magnétique multipolaire sur lequel est aimantée une pluralité de paires de pôles 1c Nord et Sud équiréparties avec une largeur angulaire constante de sorte à former les pistes principale 1a et top tour 1b, une singularité magnétique 1b1 de la piste top tour 1b étant formée de deux pôles dont la transition magnétique est différente des autres.

Suivant la réalisation représentée sur la figure 1, les pistes principale 1a, disposée vers l'intérieur de l'anneau, et top tour 1b, disposée vers l'extérieur de l'anneau, comprennent 24 paires de pôles 1c, les paires de pôles 1c de la piste top tour 1b étant en retard de phase d'une valeur φ par rapport à celles de la piste principale 1a.

Chaque singularité 1b1 est formée d'une paire de pôles 1c, la largeur des pôles étant agencée pour qu'un pôle soit déphasé de -φ par rapport au pôle correspondant de la piste principale 1a. Ainsi, chaque impulsion du signal C correspond à la détection d'une inversion de déphasage entre la piste principale 1a et la piste top tour 1b.

Par ailleurs, le capteur 5 comprend au moins trois éléments sensibles dont au moins deux sont positionnés en regard de la piste principale 1a et au moins un est positionné en regard de la piste top tour 1b.

Dans un exemple particulier, les éléments sensibles sont choisis dans le groupe comprenant les sondes à effet Hall, les magnétorésistances, les magnétorésistances géantes.

Le capteur 5 utilisé est apte à délivrer deux signaux électriques S1, S2 périodiques en quadrature par l'intermédiaire des éléments sensibles disposés en regard de la piste principale 1a et un signal électrique S3 par l'intermédiaire des éléments sensibles disposés en regard de la piste top tour 1b.

Le principe d'obtention des signaux S1 et S2 à partir d'une pluralité d'éléments sensibles alignés est par exemple décrit dans le document FR-2 792 403 issu de la demanderesse.

Mais des capteurs comprenant deux éléments sensibles qui sont aptes à délivrer les signaux S1 et S2 sont également connus.

Le capteur comprend en outre un circuit électronique qui, à partir des signaux S1, S2 et S3, délivre des signaux digitaux de position A, B carrés en quadrature et un signal top tour C sous forme de M impulsions électriques par tour du codeur 1.

Un principe d'obtention des signaux digitaux A, B et C, ainsi que différents modes de réalisation des singularités magnétiques 1b1, sont décrits dans les documents FR-2 769 088 et EP-0 871 014.

Suivant une réalisation, le capteur 5 comprend en outre un interpolateur, par exemple du type décrit dans le document FR-2 754 063 issu de la demanderesse, permettant d'augmenter la résolution des signaux de sortie.

Le capteur 5 peut être intégré sur un substrat en silicium ou équivalent par exemple AsGa, de sorte à former un circuit intégré et personnalisé pour une application spécifique, circuit parfois désigné sous le terme ASIO pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 1 peut être formé d'une cible en métal ou en verre sur laquelle les pistes principale 1a et top tour 1b ont été gravées de sorte à former un motif optique analogue au motif magnétique multipolaire exposé ci-dessus, les éléments sensibles étant alors formés de détecteurs optiques.

Le dispositif de détermination comprend un dispositif de traitement 6 des signaux A, B, C qui comprend des moyens de comptage aptes à déterminer, à partir d'une position initiale, les variations de la position angulaire du codeur 1. Dans un exemple de réalisation, les moyens de comptage comprennent un registre dans lequel la valeur de la position angulaire est incrémentée ou décrémentée d'une valeur angulaire correspondant au nombre de fronts des signaux A, B qui sont détectés, la valeur initiale étant par exemple fixée à zéro lors de la mise en service du dispositif. Ainsi, le dispositif de traitement permet de connaître la position relative du codeur 1 par rapport à la position initiale.

En outre, le dispositif de détermination comprend des moyens de mesure 7 de la position angulaire de l'organe tournant avec une incertitude angulaire Δθ. Les moyens de mesure 7 peuvent comprendre des moyens électromécaniques associés à l'organe tournant, tels qu'un potentiomètre.

Dans l'application système de direction, les moyens de mesure 7 peuvent comprendre un moyen d'analyse de la vitesse différentielle des roues. En effet, en fonction de l'angle de braquage, la vitesse différentielle des roues varie, ce qui permet de mesurer, notamment en fonction du signe et du module de ladite vitesse, la position angulaire du volant 2. Dans ce cas, l'incertitude angulaire dépend du modèle utilisé pour connaître la vitesse différentielle en fonction de l'angle de braquage, ainsi que des conditions de roulage. Selon une réalisation, l'analyse de la vitesse différentielle peut être réalisée sur les roues non motrice de sorte à limiter les erreurs qui peuvent être induites par le patinage des roues motrices. En variante, l'analyse peut être réalisée sur les deux trains de roues de sorte à corréler chacune des vitesses différentielles obtenues

Selon une réalisation, les moyens de mesure 7 peuvent comprendre un accéléromètre ou un gyroscope.

Avec l'ensemble de ces moyens de mesure 7, la position angulaire de l'organe tournant ne peut être obtenu qu'avec une incertitude Δθ qui est trop importante pour pouvoir déterminer la position angulaire absolue de l'organe tournant avec une précision suffisante dans le cadre des applications envisagées. En effet, l'incertitude Δθ est typiquement comprise entre 10° et 60°.

Pour obtenir la position angulaire absolue de l'organe tournant avec une précision suffisante, il est prévu d'utiliser également un codeur 1 dont la répartition des singularités 1b1 de la piste top tour 1b est spécifique.

Dans le mode de réalisation représenté sur la figure 1, la piste top tour 1b comprend 6 singularités 1b1 espacées de 60° entre elles. Préalablement à l'utilisation du dispositif de détermination, la position angulaire absolue d'une ou plusieurs singularité 1b1 de la piste top tour 1b peut être indexée à une position de référence. En particulier, dans une application de type système de direction, la position de référence peut être la position ligne droite des roues. Cette indexation peut être réalisée en sortie de chaîne et sur un banc dédié, la valeur des positions absolues pouvant être mémorisée dans une mémoire de type EEPROM ou flash du dispositif de traitement. Cette indexation peut également être réalisée de manière mécanique.

Ainsi, lors de la détection d'une impulsion top tour, la position angulaire absolue de l'organe tournant est de 0° modulo 60°. Un tel codeur 1 est donc destiné à être utilisé en combinaison avec un moyen de mesure 7 dont l'incertitude angulaire est strictement inférieure à 30°, de sorte à pouvoir discriminer, par l'intermédiaire de moyens de recalage, l'impulsion détectée.

Dans un exemple particulier, le moyen de mesure a une incertitude angulaire de l'ordre de 16°. Ainsi, lors de la détection d'une impulsion, si l'angle mesuré par les moyens de mesure 7 vaut 49°+/-16°, l'impulsion est identifiée de façon univoque comme étant celle correspondant à la position angulaire absolue égale à 60°.

Ainsi, dès la détection et la discrimination de l'impulsion, la position angulaire absolue correspondante est affectée, en tant que valeur initiale, dans le dispositif de traitement par l'intermédiaire des moyens de recalage de sorte à connaître ensuite, en continu, la position angulaire absolue grâce aux moyens de comptage.

Selon un mode de réalisation, le dispositif de traitement est un microprocesseur agencé pour recevoir les signaux A, B, C issus du capteur 5, dans lequel les positions angulaires absolues associées aux impulsions sont mémorisées.

Selon l'invention, il est donc possible, après la mise en service du dispositif, de connaître la position absolue du codeur 1, et donc celle de l'organe tournant associé, dès que celui-ci a tourné d'un angle maximal égal à 2Δθ. En outre, la position angulaire absolue est déterminée avec une précision bien supérieure à Δθ en ce qu'elle ne dépend plus de la résolution des moyens de mesure 7.

En fonction des moyens de mesure 7 utilisés, il est possible de répartir les singularités 1b1 différemment sur la piste top tour 1b de sorte soit à augmenter soit à diminuer l'angle de rotation maximal permettant de déterminer l'angle absolu. En outre, il est également possible de faire varier le nombre de paires de pôles 1c et/ou les dimensions du codeur 1.

Il peut également être prévu que les singularités 1b1 ne soient pas équiréparties sur la piste top tour 1b, et ce notamment si l'incertitude Δθ n'est pas constante en fonction de la position angulaire mesurée.

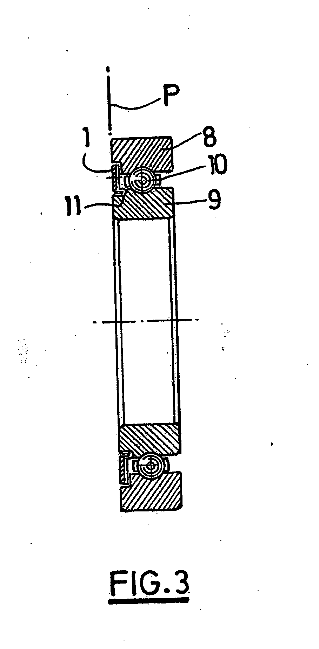

En relation avec la figure 3, on décrit un roulement comprenant une bague extérieure fixe 8 destinée à être associée à un organe fixe, une bague intérieure tournante 9 destinée à être mise en rotation par l'organe tournant et des corps roulants 10 disposés entre lesdites bagues.

Dans le mode de réalisation représenté, le codeur 1 est surmoulé sur une portée cylindrique annulaire d'une armature 11 qui est associée, par exemple par emmanchement, sur une face de la bague intérieure 9.

Le codeur 1 est associé à la bague tournante 9 de sorte que la face extérieure dudit codeur soit sensiblement contenue dans le plan P d'une face latérale de la bague fixe 8. Cette caractéristique, notamment divulguée dans le document EP-0 607 719 issu de la demanderesse, permet d'une part de protéger le codeur 1 à l'intérieur du roulement et d'autre part de pouvoir dissocier le capteur 5 du roulement en gardant la maîtrise de l'entrefer.

Dans un mode de réalisation, le volant 2 est guidé en rotation par un tel roulement de sorte à déterminer la position angulaire absolue du volant 2 par rapport au châssis, ainsi les fonctions guidage et mesure de l'angle sont réalisées par l'intermédiaire d'un même moyen mécanique.

## Revendications

1. Dispositif de détermination de la position angulaire absolue d'un organe tournant par rapport à une structure fixe, ledit dispositif comprenant :
- un codeur (1) destiné à être mis en rotation conjointement à l'organe tournant, ledit codeur comprenant une piste multipolaire principale (1a) et une piste multipolaire dite « top tour » (1 b) qui sont concentriques, ladite piste top tour comprenant M singularités (1b1) réparties angulairement ; M étant un nombre entier, M>1;
- un capteur fixe (5) disposé en regard et à distance d'entrefer du codeur (1), comprenant au moins trois éléments sensibles dont au moins deux sont positionnés en regard de la piste principale (1a) de sorte à délivrer deux signaux électriques S1, S2 périodiques en quadrature et au moins un est positionné en regard de la piste top tour (1 b) de sorte à délivrer un signal électrique S3, le capteur (5) comprenant un circuit électronique apte, à partir des signaux S1, S2 et S3, à délivrer deux signaux digitaux de position (A, B) carrés en quadrature qui sont représentatifs de la position angulaire de l'organe tournant et un signal top tour (C) sous forme de M impulsions par tour du codeur (1) ;
- un dispositif de traitement (6) des signaux (A, B, C) qui comprend des moyens de comptage aptes à déterminer, à partir d'une position initiale, les variations de la position angulaire du codeur (1) ;
- des moyens de mesure (7) de la position angulaire de l'organe tournant avec une incertitude angulaire Δθ ;
dans lequel les M singularités (1b1) sont représentatives chacune d'une position angulaire absolue de l'organe tournant et sont réparties sur la piste top tour (1 b) avec un écart angulaire entre chacune d'entre elles qui est supérieur à 2 Δθ, le dispositif de traitement (6) comprenant des moyens de recalage de la position initiale qui, lors de la détection d'une impulsion, sont aptes à discriminer l'impulsion détectée en fonction de la position angulaire issue des moyens de mesure (7) et à affecter, en tant que position initiale, la valeur de la position angulaire absolue associée à ladite impulsion.

2. Dispositif selon la revendication 1, **caractérisé en ce que** chaque piste multipolaire est formée d'un anneau magnétique sur lequel sont aimantés des pôles (1c) Nord et Sud équirépartis avec une largeur angulaire constante, une singularité magnétique (1b1) de la piste top tour (1 b) étant formée de deux pôles (1 c) adjacents dont la transition magnétique est différente des autres.

3. Roulement équipé d'un dispositif de détermination selon la revendication 1 ou 2, du type comprenant une bague fixe (8) destinée à être associée à un organe fixe, une bague tournante (9) destinée à être mise en rotation par l'organe tournant et des corps roulants (10) disposés entre lesdites bagues, ledit roulement étant **caractérisé en ce que** le codeur (1) est associé à la bague tournante (9).

4. Roulement selon la revendication 3, **caractérisé en ce que** le capteur (5) est associé à la bague fixe (8) du roulement.

5. Système de direction pour véhicule automobile, **caractérisé en ce qu**'il comprend un dispositif selon la revendication 1 ou 2, le codeur (1) étant solidaire en rotation du volant de direction (2) du véhicule et le capteur (5) étant solidaire du châssis du véhicule, de sorte à mesure la position angulaire absolue du volant (2) par rapport au châssis.

6. Système selon la revendication 5, **caractérisé en ce que** les moyens de mesure (7) de la position angulaire comprennent un moyen d'analyse de la vitesse différentielle des roues du véhicule.

7. Système selon la revendication 5, **caractérisé en ce que** les moyens de mesure (7) de la position angulaire comprennent un accéléromètre ou un gyroscope.

8. Système selon l'une quelconque des revendications 5 à 7, **caractérisé en ce que** le volant (2) est guidé en rotation par un roulement selon la revendication 3 ou 4.

## Claims

1. Device for determining the absolute angular position of a turning element in relation to a fixed structure, said device comprising:
- an encoder (1) designed to be placed in rotation together with the turning element, said encoder comprising a main multipolar track (1 a) and a so-called "top turn" multipolar track (1 b) which are concentric, said top turn track comprising M angularly distributed singularities (1 bl); M being an integer, M > 1;
- a fixed sensor (5) arranged at a distance from and facing the air-gap of the encoder (1), comprising at least three sensitive elements, at least two of which are positioned facing the main track (1a) so as to issue two periodic electrical signals S1, S2 in quadrature and at least one is positioned facing the top turn track (1 b) so as to issue an electrical signal S3, the sensor (5) comprising an electronic circuit capable of issuing two squared digital position signals (A, B) in quadrature, based on the signals S1, S2 and S3, and which are representative of the angular position of the turning element and a top turn signal (C) in the form of M impulses for every turn of the encoder (1).
- a signal (A, B, C) processing device (6) comprising counting means capable of determining the variations in the angular position of the encoder (1), from an initial position;
- means of measuring (7) the angular position of the turning element with an angular uncertainty Δθ;
in which the M singularities (1b1) each represent an absolute angular position of the turning element and are distributed over the top turn track (1b) with an angular spacing between each of them which is greater than 2 Δθ, the processing device (6) comprising means of resetting the initial position which, when they detect an impulse, are capable of categorising the detected impulse according to the angular position issued by the measurement means (7) and to assign the value of the absolute angular position associated with said impulse to the initial position.

2. Device according to claim 1, **characterised in that** each multipolar track is made up of a magnetic ring on which equispaced North and South magnetic poles (1c) are magnetized with a constant angular width, a magnetic singularity (1 b1) of the top turn track (1b) being made up of two adjacent poles (1c), with different magnetic transition to the others.

3. Bearing equipped with a determination device according to claim 1 or 2, of the type comprising a fixed ring (8) designed to be associated with a fixed element, a turning ring (9) designed to be placed in rotation by the turning element and rolling bodies (10) arranged between said rings, said bearing being **characterised in that** the encoder (1) is associated with the turning ring (9).

4. Bearing according to claim 3, **characterised in that** the sensor (5) is associated with the fixed ring (8) of the bearing.

5. Steering system for a motor vehicle, **characterised in that** it comprises a device according to claim 1 or 2, the encoder (1) being solidly attached in rotation to the steering wheel (2) of the vehicle and the sensor (5) being solidly attached to the body of the vehicle, so as to measure the absolute angular position of the steering wheel (2) in relation to the body.

6. System according to claim 5, **characterised in that** the angular position measurement means (7) comprise means of analysing the differential speed of the wheels of the vehicle.

7. System according to claim 5, **characterised in that** the angular position measurement means (7) comprise an accelerometer or a gyroscope.

8. System according to any one of the claims from 5 to 7, **characterised in that** the steering wheel (2) is guided in rotation by a bearing according to claim 3 or 4.

## Patentansprüche

1. Vorrichtung zur Bestimmung der absoluten Winkelposition eines sich im Verhältnis zu einer festen Struktur drehenden Organs, wobei die genannte Vorrichtung Folgendes umfasst:
- einen Kodierer (1), der dazu bestimmt ist, zusammen mit dem sich drehenden Organ in Rotation gebracht zu werden, wobei der genannte Kodierer eine multipolare Hauptbahn (1a) und eine multipolare, als "Top Tour" (1b) bezeichnete Bahn umfasst, die konzentrisch sind,
wobei die genannte Top Tour-Bahn M winkelförmig verteilte Singularitäten (1b1) umfasst; wobei M eine ganz Zahl M > 1 ist;
- einen gegenüber und in Luftspaltentfernung des Kodierers (1) angeordneten festen Sensor (5) mit wenigstens drei sensiblen Elementen, von denen wenigstens zwei derart gegenüber der Hauptbahn (1a) positioniert sind, dass zwei periodische elektrische Signale S1, S2 in Quadratur ausgegeben werden und wenigstens eines gegenüber der Top Tour-Bahn (1b) derart positioniert ist, dass ein elektrisches Signal S3 ausgegeben wird, wobei der Sensor (5) einen elektrischen Schaltkreis umfasst, der geeignet ist, ausgehend von den Signalen S1, S2 und S3 zwei quadratische digitale Positionssignale (A, B) in Quadratur auszugeben, die für die Winkelposition des sich drehenden Organs repräsentativ sind, und ein Signal Top Tour (C) in Form von M Impulsen pro Drehung des Kodierers (1);
- eine Verarbeitungsvorrichtung (6) der Signale (A, B), die zur Bestimmung der Abweichungen der Winkelposition des Kodierers (1) ausgehend von einer Anfangsposition geeignete Zählmittel umfasst;
- Messmittel (7) der Winkelposition des sich drehenden Organs mit einer Winkelsicherheit Δθ,
bei der die M Singularitäten (1b1) jeweils für eine absolute Winkelposition des sich drehenden Organs repräsentativ sind und auf der Top Tour-Bahn (1b) mit einem Winkelabstand zwischen jedem von ihnen verteilt sind, der größer ist als 2 Δθ, wobei die Verarbeitungsvorrichtung (6) Einstellungsmittel der Anfangsposition umfasst, die bei der Feststellung eines Impulses geeignet sind, den festgestellten Impuls in Abhängigkeit von der aus den Messmitteln (7) hervorgegangenen Winkelposition zu diskriminieren und den Wert der dem genannten Impuls zugeordneten absoluten Winkelposition als Anfangsposition zuzuordnen.

2. Vorrichtung gemäß Anspruch 1, **dadurch gekennzeichnet, dass** jede multipolare Bahn aus einem magnetischen Ring gebildet wird, auf dem gleichmäßig verteilte Pole (1c) Nord und Süd mit einer konstanten Winkelbreite magnetisiert sind, wobei eine magnetische Singularität (1b1) der Top Tour-Bahn (1b) aus zwei aneinander liegenden Polen (1c) gebildet wird, deren magnetischer Übergang von den anderen unterschiedlich ist.

3. Mit einer Vorrichtung zur Bestimmung gemäß Anspruch 1 oder 2 ausgerüstetes Wälzlager von dem Typ mit einem festen Ring (8), der dazu bestimmt ist, einem festen Organ zugeordnet zu werden, einem sich drehenden Ring (9), der dazu bestimmt ist, durch das sich drehende Organ und zwischen den genannten Ringen angeordnete rollende Körper (10) in Rotation gebracht zu werden, wobei das genannte Wälzlager **dadurch gekennzeichnet ist, dass** der Kodierer (1) dem sich drehenden Ring (9) zugeordnet ist.

4. Wälzlager gemäß Anspruch 3, **dadurch gekennzeichnet, dass** der Sensor (5) dem festen Ring (8) des Wälzlagers zugeordnet ist.

5. Richtungssystem für Automobile, **dadurch gekennzeichnet, dass** es eine Vorrichtung gemäß Anspruch 1 oder 2 umfasst, wobei der Kodierer (1) in Rotation fest mit dem Lenkrad (2) des Fahrzeugs verbunden ist und der Sensor (5) fest mit dem Fahrgestell des Fahrzeugs derart verbunden ist, dass die absolute Winkelposition des Lenkrads (2) im Verhältnis zum Fahrgestell gemessen wird.

6. System gemäß Anspruch 5, **dadurch gekennzeichnet, dass** die Messmittel (7) der Winkelposition ein Analysemittel der Differenzialgeschwindigkeit der Räder des Fahrzeugs umfassen.

7. System gemäß Anspruch 5, **dadurch gekennzeichnet, dass** die Messmittel (7) der Winkelposition einen Beschleunigungsmesser oder ein Gyroskop umfassen.

8. System gemäß Anspruch 5 bis 7, **dadurch gekennzeichnet, dass** das Lenkrad (2) in Rotation durch ein Wälzlager gemäß Anspruch 3 oder 4 geführt wird.
